# EUROPEAN PATENT SPECIFICATION

(11) **EP 2 568 531 B1**
(45) Date of publication and mention of the grant of the patent: **02.07.2014**
(21) Application number: 11180794.7
(22) Date of filing: 09.09.2011
(51) Int. Cl.: H01Q 1/24, H04M 9/08, H04M 1/60, H04B 1/04, H03H 7/38

(54) **Mobile wireless communications device including acoustic coupling based impedance adjustment and related methods**
Mobile drahtlose Kommunikationsvorrichtung mit Impedanzeinstellung basierend auf der akustischen Kopplung und entsprechende Verfahren
Dispositif de communications mobile sans fil incluant un ajustement d'impédance basé sur le couplage acoustique et procédés correspondants

(43) Date of publication of application: 13.03.2013
(73) Proprietor: BlackBerry Limited, Waterloo, ON N2K 0A7 (CA)
(72) Inventor: Mankaruse, George Soliman, Kitchener, Ontario N2P 2Y2 (CA); Shaker, George, Waterloo, Ontario N2V 2T3 (CA); Simmons, Sean Bartholomew, Waterloo, Ontario N2L 3W8 (CA); Jarmuszewski, Perry, Waterloo, Ontario N2V 2R6 (CA)
(74) Representative: Bryn-Jacobsen, Caelia

(56) References cited:
- EP-A1- 0 518 526
- EP-A1- 1 748 514
- WO-A2-2004/098070
- US-A1- 2006 240 866
- US-B1- 6 590 538

## Description

### Technical Field

The present disclosure generally relates to the field of wireless communications systems, and, more particularly, to mobile wireless communications devices and related methods.

### Background

Mobile wireless communications systems continue to grow in popularity and have become an integral part of both personal and business communications. For example, cellular telephones allow users to place and receive voice calls almost anywhere they travel. Moreover, as cellular telephone technology has increased, so too has the functionality of cellular devices and the different types of devices available to users. For example, many cellular devices now incorporate personal digital assistant (PDA) features such as calendars, address books, task lists, etc. Moreover, such multi-function devices may also allow users to wirelessly send and receive electronic mail (email) messages and access the Internet via a cellular network and/or a wireless local area network (WLAN), for example.

Even so, as the functionality of cellular communications devices continues to increase, so too does matching the demand for smaller devices which are easier and more convenient for users to carry. One challenge this poses for cellular device manufacturers is matching wireless communications circuitry with antennas to provide desired operating characteristics within the relatively limited amount of space available.

EP Patent Application No. 0518526 is directed to a portable radio apparatus having a casing thereof keeps a matching state of an antenna (20) thereof in the call waiting state and in the operating state of the apparatus. The casing is foldable and expandable and comprises an upper casing part (10) and a lower casing part (40). The upper casing part accommodates a transmitting and receiving circuit (11) connected via a variable matching circuit (12) to the antenna. The matching circuit is connected to a sensor (13a) disposed in the casing for sensing the folded state thereof. Depending on a result of the sensing operation of the sensor, the matching circuit changes the matching state by means of a switch (13).

U.S. Patent Application No. 6,590,538 is directed to an antenna apparatus which has an antenna element (102) being mounted on a portable radio for receiving electric power from a feeding point (103) in the portable radio and matching in a predetermined frequency band and a matching circuit (104) for matching the impedance of the antenna element (102) and the internal impedance of the radio circuit (105). The matching circuit (104) has a match characteristic to conjugately match the internal impedance of the radio circuit (105) and the input impedance of the matching circuit (104).

U.S. Patent Application Publication No. 2006/0240866 is directed to a method that includes determining an orientation of a portable communication device and controlling an aspect of the operation of the portable communication device based on the determined orientation.

International Publication No. WO 2004/098070 is directed to a communication device (10) and a corresponding method are arranged for changing the radiation pattern of an antenna (14), where the radiation pattern of the antenna (14) is set to a half-space pattern if the communication device (10) is in close proximity to an object. A reflector (18) is activated to produce the half space radiation pattern. The reflector (18) is deactivated to produce the full space pattern. A switching device (26) determines the state of the reflector (18). A sensing and control device (23) controls the state of the switching device (26).

EP Patent Application No. 1748514 is directed to devising the case shape and antenna placement, it is possible to provide a mobile radio terminal capable of always having a high antenna sensitivity even when the mobile radio terminal is placed in a pocket of user's clothes. In this mobile radio terminal (1), the case (2) has a plane A having a flat shape and a plane B having a protruding portion (2a) at a part of the center portion or the entire portion. An antenna element (3) is placed on the protruding portion (2a) of the plane B in parallel to the plane A. Since the plane B has a protrusion or a curved shape, when the user puts the terminal into the pocket of his/her clothes, he/she unconsciously puts the terminal with the plane A in contact with his/her body side. Accordingly, the mobile radio terminal (1) is always contained in the clothes pocket with the antenna element (3) positioned at a distance from the user's body, i.e., at the farthest position from the user's body. Consequently, the electromagnetic wave of the antenna element (3) is not affected by the user's body and the mobile radio terminal (1) can always assure a preferable antenna gain and a high antenna sensitivity.

The present invention is set out in the independent claims, with some optional features set out in the dependent claims.

### Brief Description of the Drawings

FIG. 1 is a top plan view of a mobile wireless communications device according to the present embodiments.

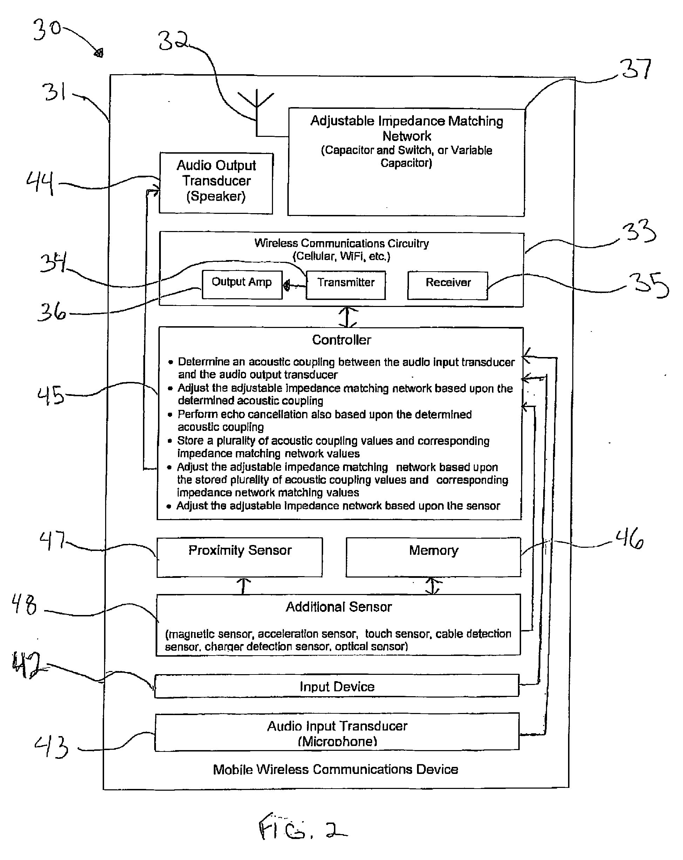

FIG. 2 is a schematic block diagram of a portion of the device of FIG. 1.
FIG. 3 is a Smith chart of measured antenna parameters for a prototype mobile wireless communications device in accordance with an exemplary embodiment.
FIG. 4 is flow chart of a method of controlling impedance matching in accordance with an exemplary embodiment.
FIG. 5 is a schematic block diagram illustrating additional components that may be included in the mobile wireless communications device of FIG. 1

### Detailed Description of the Preferred Embodiments.

The present description is made with reference to the accompanying drawings, in which various embodiments are shown. However, many different embodiments may be used, and thus the description should not be construed as limited to the embodiments set forth herein. Rather, these embodiments are provided so that this disclosure will be thorough and complete. Like numbers refer to like elements throughout.

In accordance with an exemplary aspect, a mobile wireless communications device may include a portable housing, and an antenna carried by the portable housing. The mobile wireless communications device may further include wireless communications circuitry carried by the portable housing and an adjustable impedance matching network coupled between the wireless communications circuitry and the antenna, for example. An audio input transducer and an audio output transducer may be carried by the portable housing. The mobile wireless communications device may further include a controller carried by the portable housing and configured to determine an acoustic coupling between the audio input transducer and the audio output transducer, for example. The controller may further be configured to adjust the adjustable impedance matching network based upon the determined acoustic coupling.

The controller may also be configured to perform echo cancellation also based upon the determined acoustic coupling, for example. The mobile wireless communications device may further include a memory coupled to the controller and configured to store a plurality of acoustic coupling values and corresponding impedance matching network values, for example. The controller may be configured to adjust the adjustable impedance matching network based upon the stored plurality of acoustic coupling values and corresponding impedance network matching values, for example.

The mobile wireless communications device may further include a sensor carried by the portable housing and coupled to the controller. The controller may also be configured to adjust the adjustable impedance network based upon the sensor, for example.

The sensor may include a proximity sensor. The sensor may include a magnetic sensor. The sensor may also include one of an acceleration sensor, a touch sensor, a cable detection sensor, a charger detection sensor, and an optical sensor, for example. The mobile wireless communications device may further include an input device carried by the portable housing and coupled to the controller. The controller may also be configured to adjust the adjustable impedance network based upon the input device, for example.

The adjustable impedance matching network may include at least one capacitor and at least one switch coupled thereto, for example. The adjustable impedance matching network may include at least one variable capacitor.

A method aspect is directed to a method of controlling impedance matching between wireless communications circuitry and an antenna carried by a portable housing in a mobile wireless communications device. The method may include determining an acoustic coupling between an audio input transducer and an audio output transducer carried by a portable housing, for example. The method may further include adjusting an adjustable impedance matching network coupled between the antenna and the wireless communications circuitry based upon the determined acoustic coupling.

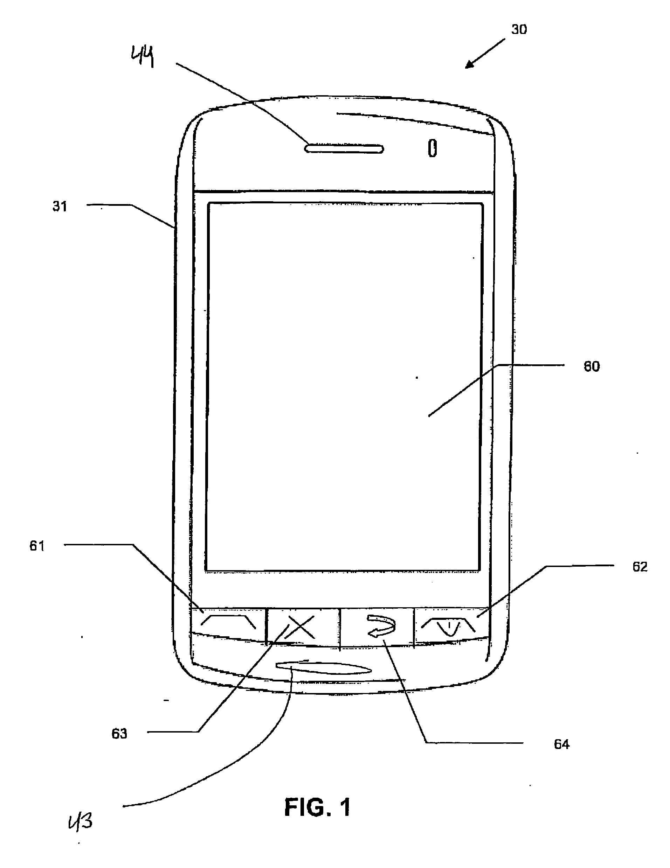

Referring initially to FIG. 1, an exemplary mobile wireless communications device **30** illustratively includes a portable housing **31.** The portable housing **31** has opposing bottom and top portions.

An antenna **32** is also carried by the portable housing **31.** The antenna **32** may be cellular antenna, for example. The antenna **32** may be another type of antenna, as will be appreciated by those skilled in the art.

The exemplary device **30** further illustratively includes a display **60** and a plurality of control keys including an "off hook" (i.e., initiate phone call) key **61,** an "on hook" (i.e., discontinue phone call) key **62,** a menu key **63,** and a return or escape key **64.** Operation of the various device components and input keys, etc., will be described further below with reference to FIG. 6.

The mobile wireless communications device **30** also includes wireless communications circuitry **33** carried by the portable housing. The wireless communications circuitry **33** may be configured to perform at least one wireless communications function. The wireless communications circuitry **33** may be configured to perform cellular communications, for example. The wireless communications circuitry **33** may be configured to operate at other frequencies or frequency bands, as will be appreciated by those skilled in the art.

The wireless communications circuitry **33** may include a wireless transmitter **34** and wireless receiver **35** configured to perform wireless transmit and receive functions, respectively. The wireless communications circuitry **33** may also include an output amplifier **36** coupled to the wireless transmitter **34,** for example. The wireless communications circuitry **33** may include additional or other components or circuitry for performing wireless communications functions.

The mobile wireless communications device **30** also includes an adjustable impedance matching network **37** coupled between the wireless communications circuitry **33** and the antenna **32.** The adjustable impedance matching network **37** includes a plurality of capacitors and switches coupled thereto for adjusting the capacitance of the adjustable impedance matching network. The adjustable impedance matching network **37** may include a microelectromechanical systems capacitor, for example. The adjustable impedance matching network **37** may include other types of capacitors and/or switches so that adjustments can be made, as will be appreciated by those skilled in the art.

An audio input transducer **43** is illustratively carried by the portable housing **31.** The audio input transducer is illustratively configured to operate as a microphone at the lower end of the housing **31.** The audio input transducer **43** may be carried elsewhere by the portable housing **31,** and more than one audio input transducer may be carried by the portable housing.

An audio output transducer **44** is illustratively may be carried by the portable housing **31.** The audio output transducer **44** is illustratively configured to operate as a speaker, for example. The audio output transducer **44** is illustratively carried by the top of the portable housing **31.** The audio output transducer **44** may be carried elsewhere by the portable housing **31,** and more than one audio output transducer may be carried by the portable housing such as a speakerphone on the rear of the housing **31.**

A controller **45,** or processor, is also carried by the portable housing **31.** The controller **45** is configured to determine an acoustic coupling between the audio input transducer **43** and the audio output transducer **44.**

The controller **45** is also configured to adjust the adjustable impedance matching network **37** based upon the determined acoustic coupling. The mobile wireless communications device **30** also includes a memory **46** coupled to the controller **45** and configured to store a plurality of the determined acoustic coupling values and corresponding impedance matching network values. For example, eight different sets of corresponding determined acoustic coupling values and impedance matching network values may be stored in the memory **46.** Of course, more sets of corresponding determined acoustic coupling values and impedance matching network values may be stored in the memory **46.** The impedance matching network values may be empirically determined.

As will be appreciated by those skilled in the art, an acoustic coupling value, stored in the memory **46,** for example, in dB, may correspond to a position or angle of the mobile wireless communications device **30** with respect to a user, for example. In other words, the acoustic coupling value is affected by an object's proximity to the mobile wireless communications device **30.** For example, an acoustic coupling value may be determined when the user is talking on the mobile wireless communications device **30,** while another determined acoustic coupling value may be determined when the user is typing, or when the mobile wireless communications device is not being held by the user. The acoustic coupling value is typically larger when the mobile wireless communications device **30** is placed on a wood table, for example, as compared to an acoustic coupling value in free-space.

The controller **45** adjusts the adjustable impedance matching network **37** based upon the stored plurality of acoustic coupling values and corresponding impedance network matching values. More particularly, the controller **45** may adjust the switches to, in essence, turn on or turn off capacitors. Alternatively, the adjustable impedance matching network **37** may include a variable capacitor **41** instead of capacitors and switches. This may advantageously reduce the quantity of discrete components, and thus further reduce the amount of space used within the portable housing **31.**

In some embodiments, the controller **45** may not use the stored plurality of acoustic coupling values, but may calculate the corresponding impedance matching network value based upon an algorithm, for example, that may be stored in the memory **46.** Additionally, the controller **45** may determine the acoustic coupling value and adjust the impedance matching network in near real time, for example. This advantageously allows for the impedance of the wireless communications circuitry **33** and the antenna **32** to be matched, for example, to within ±10% of each other, to allow an increased efficiency of power transfer therebetween for the different orientations of the mobile wireless communications device **30.** The impedance of the wireless communications circuitry **33** and the antenna **32** may be matched to other tolerances as will be appreciated by those skilled in the art.

The controller **45** may also be advantageously configured to perform echo cancellation also based upon the determined acoustic coupling, for example. In other words, the determined acoustic coupling value is also used for echo cancellation. As will be appreciated by those skilled in the art, echo cancellation between the audio input device **43** and the audio output device **44** is highly desired so that a user does not hear his own voice through the audio output device when speaking into the audio input device. Echo cancellation is also used to cancel echo for another user on the line (i.e. remote or landline user). If echo cancellation is not configured properly, the other user may hear himself back through his handset or landline phone. The user of the mobile wireless communications device **30** may not be able to tell if the echo cancellation is working or not.

The mobile wireless communications device **30** also includes a proximity sensor **47** carried by the portable housing **31** and coupled to the controller **45.** The proximity sensor **47.** More particularly, the proximity sensor **47** is configured to detect proximity to a user, for example, when the mobile wireless communications device **30** is held adjacent a user's face. The proximity sensor **47** cooperates with the controller **45** to adjust the adjustable impedance matching network **37** also based upon the proximity. For example, if the mobile wireless communications device **30** is adjacent the user's face and is held in a particular orientation, which corresponds to a determined acoustic coupling value, the controller **45** may adjust the adjustable impedance matching network **37** accordingly. In other words, the status of the proximity sensor **47,** i.e. on or off, may be another data entry in the table stored in the memory **46,** or used in the algorithm, for determining the corresponding impedance matching network value. This advantageously may result in an increased accuracy impedance matching network value.

An additional sensor **48** may carried by the portable housing **31** and coupled to the controller **45.** The additional sensor **48** may be in the form of a magnetic sensor for determining when the mobile wireless communications device **30** is in holster, for example.

The additional sensor **48** may also be in the form of an acceleration sensor or accelerometer, to determine when the mobile wireless device **30** is in motion. The additional sensor **48** may also be in the form of a touch sensor for determining when the mobile wireless communications device **30** is being held by a user or being operated by a user, for example, via a touch screen input. The additional sensor **48** may also be in the form of a cable detection sensor for determining when the mobile wireless communications device **30** is tethering to another device, for example, a personal computer.

The additional sensor **48** may also be in the form of a charger detection sensor for determining when the mobile wireless communications device **30** is being charged and/or is coupled to a charger.

The additional sensor **48** may also be in the form of an optical sensor. Of course, more than one additional sensor **48** may be used and each may be in different form, and may cooperate with the controller **45,** similar to the proximity sensor **47,** to adjust the adjustable impedance matching network **37** also based thereon. The additional sensor **48** cooperating with the controller **45** may provide increased accuracy impedance matching network value, which thus may result in improved antenna performance by reducing losses.

The mobile wireless communications device **30** may also include an input device **42** which may be in the form of push buttons, for example, the control keys **61-64.** The input device **42** may be in the form of a keypad, keyboard, trackball, or other input device, for example. The input device **42** is coupled to the controller **45.** The controller **45** adjusts the adjustable impedance matching network, and, more particularly, the impedance matching network value, based upon the input device **42.** The input device **42** may determine when the mobile wireless communications device **30** is being used, for example.

For example, one possible scenario would be when the user is on a phone call, placing the mobile wireless communications device **30** in proximity to the user's face. The proximity detector **47** is typically triggered to disable a touch panel, i.e an additional sensor **48** in the form of a touch sensor, to put the display **60** in a standby mode. The information from the proximity detector **47** may be classified as a "one" in a binary form, meaning that there is insufficient information to detect the relative position of the wireless device with the respect to the user's face based upon this information alone. In contrast, it is typically possible to find a measurable difference in the echo information, i.e. echo coupling. Analyzing performance of the antenna **32** along with echo coupling in such positions advantageously allows for a lookup table in the memory **46** for an increased number of possible variations. It is thus possible to predict the deviation of impedance of the antenna **32** from a desired or matched value due to proximity of the user's face by relying on the proximity sensor **47** along with the echo coupling information.

In prior art mobile wireless communications devices, there is an increasing demand for integrating more wireless communications circuitry, for example, to communicate over multiple frequency bands, into a relatively small size portable housing. The most sensitive component to user interactions with respect to wireless communications circuitry is typically the corresponding antenna(s). As will be appreciated by those skilled in the art, the antenna **32** may be designed to operate with corresponding wireless communications circuitry **33** for certain loading conditions. In a more realistic scenario, user interaction would impose different loading conditions on the wireless communications circuitry **33,** thus deteriorating the operational mode from what may be considered optimal conditions.

One approach to address this is to use RF tuners to maintain the loading conditions as close as possible for all possible realistic scenarios. However, such RF tuners generally result in increased power consumption, higher RF losses and higher space/cost constraints. Moreover, RF tuners typically require a complex impedance detection algorithm or circuitry. This is usually reflected in a deterioration of the overall system performance, i.e., a decrease in radiation efficiency and total radiated power. Thus, adding additional circuitry for the detection of impedance variation of the antenna with different usage scenarios generally negatively impacts the overall power consumption and efficiency of a mobile wireless communications device.

The mobile wireless communications device **30** of the present embodiments advantageously uses the determined acoustic coupling and sensor information for impedance adjustment and may be used for other or additional processing. In other words, the addition of circuitry for impedance adjustment in the mobile wireless communications device **30** is greatly reduced.

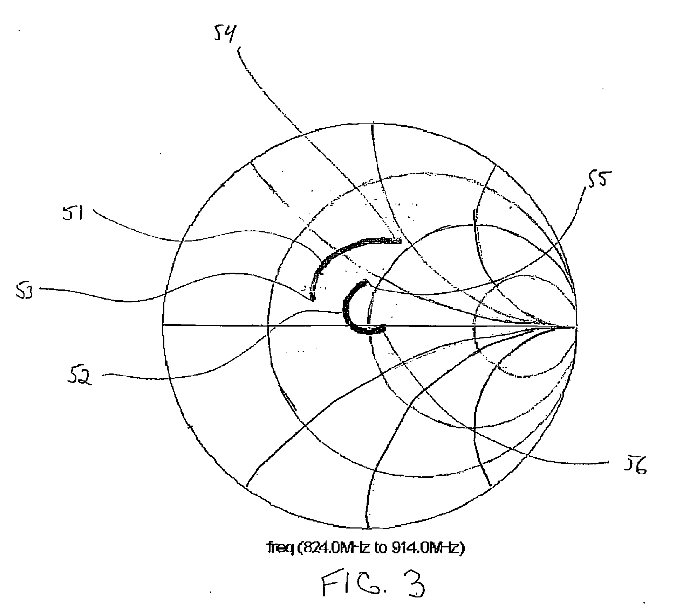

Referring now to the Smith chart in FIG. 3, frequency, reflection coefficients, and impedance measured for a prototype mobile wireless communications device similar to that the mobile wireless communications device **30** described above are illustrated. The Smith chart illustrates the relationship among the above parameter with respect to the position or orientation of the mobile wireless communications device. Line **51** corresponds to the mobile wireless communications device being adjacent a user's face. The echo coupling is 60 dB. Line **52** corresponds to the mobile wireless communications device being spatially separated from the user's face and has an echo coupling of 52 dB. Point **53** has a frequency of 824 MHz, S parameter of S(2,2) = 0.31/154.684, and impedance of Z0 * (0.545 + j0.16). Point **54** has a frequency of 914 MHz, S parameter of S(2,2) = 0.438/71.601, and impedance of Z0 * (0.883 + j0.908). Point **55** has a frequency of 914 MHz, S parameter of S(9,9) = 0.222/95.739, and impedance of Z0 * (0.87 + j0.403). Point **56** has a frequency of 824 MHz, S parameter of S(9,9) = 0.067/-11.478, and impedance of Z0 * (1.140 - j0.031).

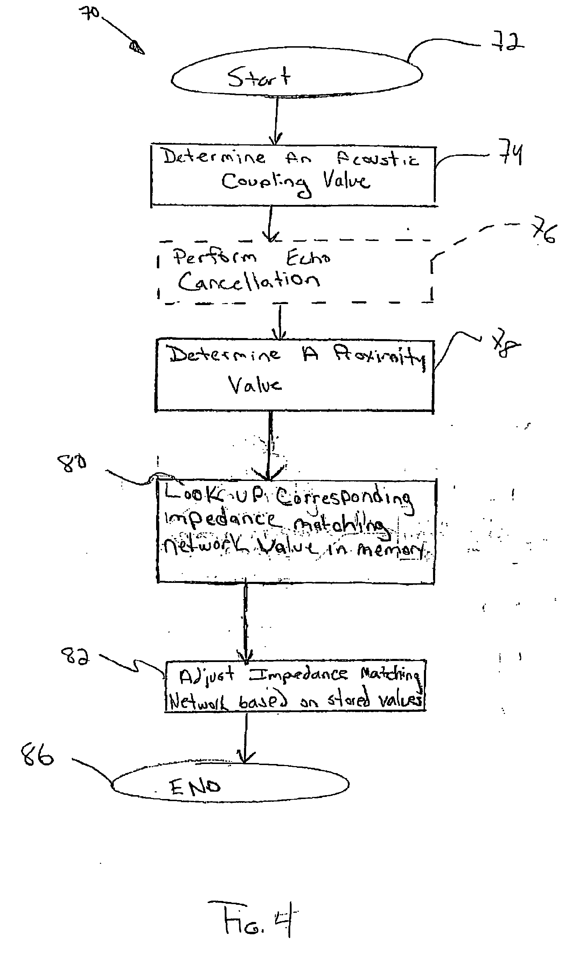

Referring now to the flowchart **70** in FIG. 4, a method of controlling impedance matching between wireless communications circuitry **33** and an antenna **32** carried by a portable housing **31** in a mobile wireless communications device **30** is illustrated. Beginning at Block **72,** the method includes determining an acoustic coupling between an audio input transducer **43** and an audio output transducer **44** carried by the portable housing **31** (Block **74).** At Block **76,** the method includes optionally performing echo cancellation also based upon the determined acoustic coupling. A proximity value corresponding to a proximity of a user is determined via a proximity sensor **47** at Block **78.**

A corresponding impedance matching network value of an adjustable impedance matching network **37** coupled between the antenna **32** and the wireless communications circuitry **33** is retrieved from the memory **46** (Block **80).** The impedance matching network **37** is adjusted based stored value (Block **82).** By adjusting the adjustable impedance matching network value, the impedance between the wireless communications circuitry **33** and the antenna **32** is advantageously matched, for example, to within a threshold, as will be appreciated by those skilled in the art. The method ends at Block **86.**

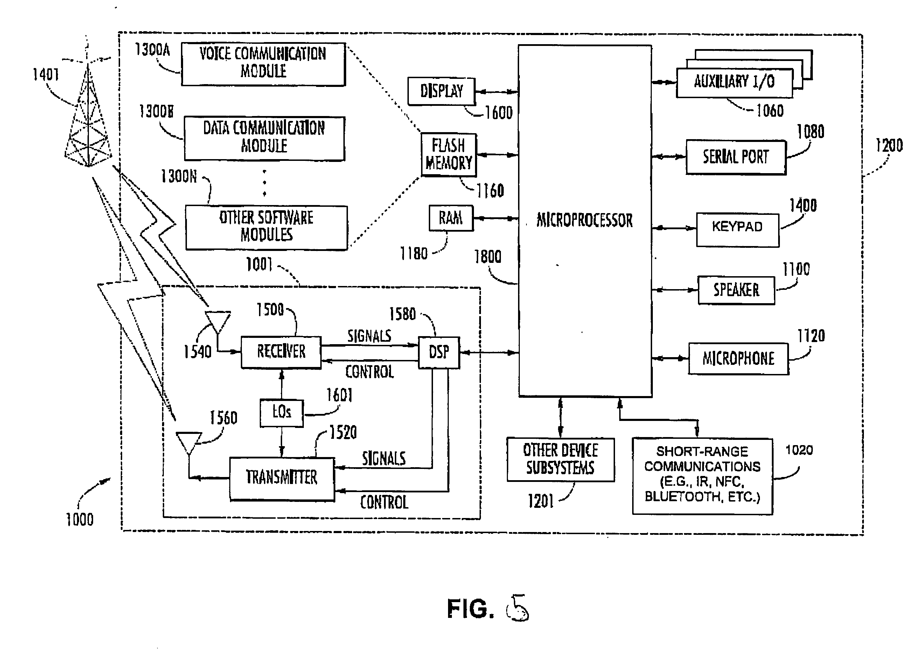

Example components of a mobile wireless communications device **1000** that may be used in accordance with the above-described embodiments are further described below with reference to FIG. 5. The device **1000** illustratively includes a housing **1200,** a keyboard or keypad **1400** and an output device **1600.** The output device shown is a display **1600,** which may comprise a full graphic LCD. Other types of output devices may alternatively be utilized. A processing device **1800** is contained within the housing **1200** and is coupled between the keypad **1400** and the display **1600.** The processing device **1800** controls the operation of the display **1600**, as well as the overall operation of the mobile device **1000,** in response to actuation of keys on the keypad **1400.**

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 5. These include a communications subsystem **1001**; a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** may comprise a two-way RF communications device having data and, optionally, voice communications capabilities. In addition, the mobile device **1000** may have the capability to communicate with other computer systems via the Internet.

Operating system software executed by the processing device **1800** is stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as 3GSM, 3GPP, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device may also be used to compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, a Bluetooth™ communications module to provide for communication with similarly-enabled systems and devices, or a near field communications (NFC) sensor for communicating with a NFC device or NFC tag via NFC communications.

Many modifications and other embodiments of the invention will come to the mind of one skilled in the art having the benefit of the teachings presented in the foregoing descriptions and the associated drawings. Therefore, it is understood that the invention is not to be limited to the specific embodiments disclosed, and that modifications and embodiments are intended to be included within the scope of the appended claims.

## Claims

1. A mobile wireless communications device (30) comprising:
a portable housing (31);
an antenna (32) carried by said portable housing;
wireless communications circuitry (33) carried by said portable housing;
an adjustable impedance matching network (37) coupled between said wireless communications circuitry and said antenna;
an audio input transducer (34) and an audio output transducer (44) carried by said portable housing; and **characterised in that** it further comprises
a controller (45) carried by said portable housing and configured to
determine an acoustic coupling between said audio input transducer and said audio output transducer, and
adjust said adjustable impedance matching network based upon the determined acoustic coupling.

2. The mobile wireless communications device according to Claim 1, wherein said controller is configured to perform echo cancellation also based upon the determined acoustic coupling.

3. The mobile wireless communications device according to Claim 1, further comprising a memory (46) coupled to said controller and configured to store a plurality of acoustic coupling values and corresponding impedance matching network values; and wherein said controller is configured to adjust said adjustable impedance matching network based upon the stored plurality of acoustic coupling values and corresponding impedance network matching values.

4. The mobile wireless communications device according to Claim 1, further comprising a sensor carried by said portable housing and coupled to said controller; and wherein said controller is also configured to adjust said adjustable impedance network based upon said sensor.

5. The mobile wireless communications device according to Claim 4, wherein said sensor comprises a proximity sensor (47).

6. The mobile wireless communications device according to Claim 4, wherein said sensor comprises a magnetic sensor (48).

7. The mobile wireless communications device according to Claim 4, wherein said sensor comprises one of an acceleration sensor, a touch sensor, a cable detection sensor, a charger detection sensor, and an optical sensor.

8. The mobile wireless communications device according to Claim 1, further comprising an input device carried by said housing and coupled to said controller; and wherein said controller is also configured to adjust said adjustable impedance network based upon said input device.

9. The mobile wireless communications device according to Claim 1, wherein said adjustable impedance matching network comprises at least one capacitor and at least one switch coupled thereto.

10. The mobile wireless communications device according to Claim 1, wherein said adjustable impedance matching network comprises at least one variable capacitor.

11. A method of controlling impedance matching between wireless communications circuitry (33) and an antenna (32) carried by a portable housing (31) in a mobile wireless communications device (30), **characterised in that** it comprises the steps of:
determining an acoustic coupling between an audio input transducer (43) and an audio output transducer (44) carried by a portable housing (31); and
adjusting an adjustable impedance matching network (37) coupled between the antenna and the wireless communications circuitry based upon the determined acoustic coupling.

12. The method according to Claim 11, further comprising performing echo cancellation also based upon the determined acoustic coupling.

13. The method according to Claim 11, further comprising:
storing a plurality of acoustic coupling values and corresponding impedance matching network values in a memory; and
adjusting the adjustable impedance matching network based upon the stored plurality of acoustic coupling values and corresponding impedance network matching values.

14. The method according to Claim 11, further comprising adjusting the adjustable impedance network based upon a sensor carried by the portable housing.

15. The method according to Claim 14, wherein the sensor comprises a proximity sensor (47).

## Patentansprüche

1. Eine mobile drahtlose Kommunikationsvorrichtung (30), die aufweist:
ein tragbares Gehäuse (31);
eine Antenne (32), die von dem tragbaren Gehäuse getragen wird;
Drahtloskommunikationsschaltungen (33), die von dem tragbaren Gehäuse getragen werden;
ein anpassbares Impedanzanpassungsnetzwerk (37), das zwischen den Drahtloskommunikationsschaltungen und der Antenne gekoppelt ist;
einen Audioeingangswandler (34) und einen Audioausgangswandler (44), die von dem tragbaren Gehäuse getragen werden; und **gekennzeichnet durch** weiter aufweisend:
eine Steuervorrichtung (45), die von dem tragbaren Gehäuse getragen wird und konfiguriert ist zum
Bestimmen einer akustischen Kopplung zwischen dem Audioeingangswandler und dem Audioausgangswandler, und Anpassen des anpassbaren Impedanzanpassungsnetzwerks basierend auf der bestimmten akustischen Kopplung.

2. Die mobile drahtlose Kommunikationsvorrichtung gemäß Anspruch 1, wobei die Steuervorrichtung konfiguriert ist zum Durchführen einer Echokompensation ebenfalls basierend auf der bestimmten akustischen Kopplung.

3. Die mobile drahtlose Kommunikationsvorrichtung gemäß Anspruch 1, die weiter einen Speicher (46) aufweist, der mit der Steuervorrichtung gekoppelt ist und konfiguriert ist zum Speichern einer Vielzahl von akustischen Kopplungswerten und entsprechender Impedanzanpassungsnetzwerkwerte; und wobei die Steuervorrichtung konfiguriert ist zum Anpassen des anpassbaren Impedanzanpassungsnetzwerks basierend auf der gespeicherten Vielzahl von akustischen Kopplungswerten und entsprechender Impedanzanpassungsnetzwerkwerte.

4. Die mobile drahtlose Kommunikationsvorrichtung gemäß Anspruch 1, die weiter einen Sensor aufweist, der von dem tragbaren Gehäuse getragen wird und mit der Steuervorrichtung gekoppelt ist; und wobei die Steuervorrichtung auch konfiguriert ist zum Anpassen des anpassbaren Impedanznetzwerks basierend auf dem Sensor.

5. Die mobile drahtlose Kommunikationsvorrichtung gemäß Anspruch 4, wobei der Sensor einen Nähe-Sensor (47) aufweist.

6. Die mobile drahtlose Kommunikationsvorrichtung gemäß Anspruch 4, wobei der Sensor einen magnetischen Sensor (48) aufweist.

7. Die mobile drahtlose Kommunikationsvorrichtung gemäß Anspruch 4, wobei der Sensor einen aus einem Beschleunigungssensor, einem Berührungssensor, einem Kabelerfassungssensor, einem Ladeeinrichtungs-Erfassungssensor und einem optischen Sensor aufweist.

8. Die mobile drahtlose Kommunikationsvorrichtung gemäß Anspruch 1, die weiter eine Eingabevorrichtung aufweist, die durch das Gehäuse getragen wird und mit der Steuervorrichtung gekoppelt ist;
und wobei die Steuervorrichtung auch konfiguriert ist zum Anpassen des anpassbaren Impedanznetzwerks basierend auf der Eingabevorrichtung.

9. Die mobile drahtlose Kommunikationsvorrichtung gemäß Anspruch 1, wobei das anpassbare Impedanzanpassungsnetzwerk zumindest einen Kondensator und zumindest einen damit gekoppelten Schalter aufweist.

10. Die mobile drahtlose Kommunikationsvorrichtung gemäß Anspruch 1, wobei das anpassbare Impedanzanpassungsnetzwerk zumindest einen variablen Kondensator aufweist.

11. Verfahren zum Steuern einer lmpedanzanpassung zwischen Drahtloskommunikationsschaltungen (33) und einer Antenne (32), die von einem tragbaren Gehäuse (31) in einer mobilen drahtlosen Kommunikationsvorrichtung (30) getragen wird, **dadurch gekennzeichnet, dass** es die Schritte aufweist:
Bestimmen einer akustischen Kopplung zwischen einem Audioeingangswandler (43) und einem Audioausgangswandler (44),
die von einem tragbaren Gehäuse (31) getragen werden; und
Anpassen eines anpassbaren Impedanzanpassungsnetzwerks (37), das zwischen der Antenne und den
Drahtloskommunikationsschaltungen gekoppelt ist, basierend auf der bestimmten akustischen Kopplung.

12. Das Verfahren gemäß Anspruch 11, das weiter aufweist ein Durchführen einer Echokompensation ebenfalls basierend auf der bestimmten akustischen Kopplung.

13. Das Verfahren gemäß Anspruch 11, das weiter aufweist:
Speichern einer Vielzahl von akustischen Kopplungswerten und entsprechender Impedanzanpassungsnetzwerkwerte in einem Speicher; und
Anpassen des anpassbaren Impedanzanpassungsnetzwerks basierend auf der gespeicherten Vielzahl von akustischen Kopplungswerten und entsprechender Impedanzanpassungsnetzwerkwerte.

14. Das Verfahren gemäß Anspruch 11, das weiter aufweist ein Anpassen des anpassbaren Impedanznetzwerks basierend auf einem Sensor, der von dem tragbaren Gehäuse getragen wird.

15. Das Verfahren gemäß Anspruch 14, wobei der Sensor einen Nähe-Sensor (47) aufweist.

## Revendications

1. Dispositif de communications sans fil mobile (30) comprenant :
un boîtier portatif (31) ;
une antenne (32) portée par ledit boîtier portatif ;
un ensemble de circuits de communications sans fil (33) porté par ledit boîtier portatif ;
un réseau d'adaptation d'impédance réglable (37) couplé entre ledit ensemble de circuits de communications sans fil et ladite antenne ;
un transducteur d'entrée audio (34) et un transducteur de sortie audio (44) portés par ledit boîtier portatif ; et **caractérisé en ce qu'**il comprend en outre
un contrôleur (45) porté par ledit boîtier portatif et configuré
pour déterminer un couplage acoustique entre ledit transducteur d'entrée audio et ledit transducteur de sortie audio, et
pour régler ledit réseau d'adaptation d'impédance réglable sur la base du couplage acoustique déterminé.

2. Dispositif de communications sans fil mobile selon la revendication 1, dans lequel ledit contrôleur est configuré pour exécuter une suppression d'écho également sur la base du couplage acoustique déterminé.

3. Dispositif de communications sans fil mobile selon la revendication 1, comprenant en outre une mémoire (46) couplée audit contrôleur et configurée pour stocker une pluralité de valeurs de couplage acoustique et de valeurs de réseau d'adaptation d'impédance correspondantes ; et où ledit contrôleur est configuré pour régler ledit réseau d'adaptation d'impédance réglable sur la base de la pluralité stockée de valeurs de couplage acoustique et de valeurs de réseau d'adaptation d'impédance correspondantes.

4. Dispositif de communications sans fil mobile selon la revendication 1, comprenant en outre un capteur porté par ledit boîtier portatif et couplé audit contrôleur ; et où ledit contrôleur est également configuré pour régler ledit réseau d'impédance réglable sur la base dudit capteur.

5. Dispositif de communications sans fil mobile selon la revendication 4, dans lequel ledit capteur comprend un capteur de proximité (47).

6. Dispositif de communications sans fil mobile selon la revendication 4, dans lequel ledit capteur comprend un capteur magnétique (48).

7. Dispositif de communications sans fil mobile selon la revendication 4, dans lequel ledit capteur comprend l'un d'un capteur d'accélération, d'un capteur tactile, d'un capteur de détection de câble, d'un capteur de détection de chargeur et d'un capteur optique.

8. Dispositif de communications sans fil mobile selon la revendication 1, comprenant en outre un dispositif d'entrée porté par ledit boîtier et couplé audit contrôleur ; et où ledit contrôleur est également configuré pour régler ledit réseau d'impédance réglable sur la base dudit dispositif d'entrée.

9. Dispositif de communications sans fil mobile selon la revendication 1, dans lequel ledit réseau d'adaptation d'impédance réglable comprend au moins un condensateur et au moins un commutateur qui lui est couplé.

10. Dispositif de communications sans fil mobile selon la revendication 1, dans lequel ledit réseau d'adaptation d'impédance réglable comprend au moins un condensateur variable.

11. Procédé de contrôle d'adaptation d'impédance entre un ensemble de circuits de communications sans fil (33) et une antenne (32) portés par un boîtier portatif (31) dans un dispositif de communications sans fil mobile (30), **caractérisé en ce qu'**il comprend les étapes qui consistent :
à déterminer un couplage acoustique entre un transducteur d'entrée audio (43) et un transducteur de sortie audio (44) portés par un boîtier portatif (31) ; et
à régler un réseau d'adaptation d'impédance réglable (37) couplé entre l'antenne et l'ensemble de circuits de communications sans fil sur la base du couplage acoustique déterminé.

12. Procédé selon la revendication 11, comprenant en outre le fait d'exécuter une suppression d'écho également sur la base du couplage acoustique déterminé.

13. Procédé selon la revendication 11, comprenant en outre le fait :
de stocker une pluralité de valeurs de couplage acoustique et de valeurs de réseau d'adaptation d'impédance correspondantes dans une mémoire ; et
de régler le réseau d'adaptation d'impédance réglable sur la base de la pluralité stockée de valeurs de couplage acoustique et de valeurs de réseau d'adaptation d'impédance correspondantes.

14. Procédé selon la revendication 11, comprenant en outre le fait de régler le réseau d'impédance réglable sur la base d'un capteur porté par le boîtier portatif.

15. Procédé selon la revendication 14, dans lequel le capteur comprend un capteur de proximité (47).
